# EUROPEAN PATENT SPECIFICATION

(11) **EP 3 542 607 B1**
(45) Date of publication and mention of the grant of the patent: **25.08.2021**
(21) Application number: 19020131.9
(22) Date of filing: 18.03.2019
(51) Int. Cl.: A01B 39/16, A01B 33/06, A01B 33/08, A01B 35/10, A01B 35/28, A01B 35/32, A01B 39/08, A01B 39/12, A01B 41/04, A01B 63/32

(54) **EQUIPMENT FOR NATURAL REGENERATION ASSISTANCE WORKS, SPECIFIC TO OAK BRUSH**
VORRICHTUNG ZUR NATÜRLICHEN REGENARATION VON EICHE
APPAREIL POUR LA RÉGÉNERATION NATURELLE DE CHÊNE

(30) Priority: 22.03.2018 RO 216
(43) Date of publication of application: 25.09.2019
(73) Proprietor: Institutul National de Cercetare-Dezvoltare in Silvicultura "MARIN DRACEA", 077190 Ilfov (RO)
(72) Inventor: Catalin, Tudosoiu, 021677 Bucuresti (RO)
(74) Representative: Strenc, Alexandru Cristian

(56) References cited:
- EP-A1- 0 341 153
- DE-A1- 3 222 503
- DE-A1- 4 343 869
- DE-U1- 8 213 151
- FR-A1- 2 690 306

## Description

### Technical Field

This invention is destinated to works coming to the aid of natural regeneration of oak (Quercus) stands with the purpose of soil surface mobilization and homogenization (to 3-5-8 cm depth) while removing the litter, so as to ensure optimum conditions for the germination of seeds (acorns), subsequently the development of plantlets throughout the year and the growth of a new stand.

Stand regeneration is a way of regeneration that makes the most of the fructification capacity of the full-grown trees simultaneously with the protection threy provide to the seedlings in place. The best regeneration can be achieved by natural way from the seeds of mature trees.

The works that help natural regeneration consist in removing the litter layer, mobilizing the (fallow) soil while removing the grass layer, the ground preparation resulting in beds of 0.8 to 1.0 m diameter or 1.0 m wide strips tilled on contour line, such operation being predominantly performed in the years of fructification before spreading the seeds.

Germination is influenced by humidity, temperature, air and light. The oak seeds have thick consistent tegument that prevents hydration and the commencement of the germination process.

The litter in place (dry leaves fallen in the autumn-winter season, wastes of loose tendrils and branches lying on the ground and any existing grass layer) beneath the tree canopy influences the seed germination process. Thus a thin loosen, sufficiently moist, rotting litter or a horizon of structured, moist, loosen soil rich in humus is favourable to the root penetration in the ground unlike a thick, compact, dry litter which poses a natural obstacle to the already rootlets sprouting from the seed since they cannot get through it to reach the organic-mineral soil.

Soil tillage aims at loosening and homogenizing the soil so as to achieve the best aeration and humidity conditions and to remove any potential competing grass layer.

The tandem consisting in the power source and the equipment designed to do the tilling to help natural regeneration carries out the works within the tree stands to the limit of the canopy projection on the ground, with the purpose of improving the germination conditions for the seeds so that the litter cannot prevent the contact thereof with the soil.

### Background Art

No technical solutions have been identified in terms of special machinery or equipment to fully cover such purpose, however there are equipment and/or plants that can meet in part the requirements of such works.

Currently, the soil tillage for preparing the beds and the strips intended to help natural regeneration of stands is performed by workers in a significant proportion by the use of manual tools (hoes, mattocks).

Ground sections can also be prepared by using portable powered tools such as rotary harrows manufactured by companies as Stihl, Husqvarna and others, however the range of such equipment is reduced and the productivity achieved per work is low.

Strip-till can also be performed by using a tandem made of the power source, specifically a motorized cultivator equipped with rotary harrows driven by the power take-off and power tillers which however are inefficient for preparing the ground beds.

For the purposes shown above, the current progress points to some technical solutions that require patent protection.

In patent document DE 43869 A1 "Verfahren und Bodenbearbeitungsgerat zur Bodenbearbeitung fur landwirtschaftlichen Reihenkunde" is presented a solution used for soil cultivation for wine and fruit crops based on an equipment endowed with a hydraulically operated vertical rotary mill with vertical cylindrical finger type knives, as working parts. These working parts are disposed on a rotor and although the solution presents a possibility of adjustments in horizontal plane or adjustment of the working depth, there is no functional adaptation to the slope of the land and thus the equipment is less flexible than necessary in certain working conditions.Another limitation comes from the fact that for cultivation processing the equipment requires two passes of the tandem energy source equipment.

In its turn, patent document EPO 0341153 A1 "Cultivateur rotatif polyvalent a rotors independants mobiles et orientables" describes a solution to be used in similar conditions like the previous one, but the equipment comprises two hydraulically actuated rotors each fitted with two blade-type knives that can be removable assembled on the motor. This equipment presents practically same disadvantages like de previous one .

Another solution if presented in, patent document CA 2376461 A1" Mobile silvicultural apparatus and method for operating the same" which presents a mobile apparatus designed for silviculture and a connected method of use that tackles and solves the problem of natural regeneration via selective thinning of a forest of mature and immature trees so as to maintain only specific types of trees. The mobile silvicultural apparatus has a wheeled supportive framework, a collapsible motor arm and respectively an operating system which, in addition to tree selection, carries out ground cleaning.

Patent document US 698478B2" Mobile silvicultural apparatus and method for operating the same" covers the same purpose as mentioned above.

None of the above documents come up with a solution for removing litter or for achieving surface mobilization and homogenization of ground at appropriate depth which, in our opinion, are significant measures to help natural regeneration.

Patent documentation US 2004/0149467 "Silvicultural tillage apparatus and method" aims at a technical solution which prepares the soil via mechanical association of several specially-shaped blades so as to facilitate soil hydration and access of chemical fertilizers. However the equipment fails to remove the litter, which in our opinion is highly important to support natural regeneration.

The patent documentation US 2016/0029540 A1" Agricultural device for restoring soil fertility" introduces a sophisticated equipment designed generally for soil preparation based on the concept of bioenergetics. Apart from the complexity of the proposed device for achieving horizontal tillage, this solution is not specifically intended for tree stands, therefore failing to consider removing the litter.

The disadvantages of the aforementioned working procedures are that:
- ground preparation in beds and strips using manual tools achieves low productivity, is a time-consuming process, implies high salary costs which, correlated to the scarce labour force, result in achieving a minimum amount of works;
- the use of portable power tools can handle the requirements in terms of preparing circular-shaped beds, however the rotary harrow has no capacity to penetrate fallow soils for soil mobilization and removal of litter, such equipment being used most often on soils that were already worked before, for occasional works or hobbies;
- power tillers and power cultivators equipped with rotary harrows could be used for strip-till works provided that the ground was prepared before, however the soil mobilization is linear and leaves the soil insufficiently homogenized or aerated; besides that, they cannot work the strips similarly to narrow forestry terraces.
- it should be mentioned that both power tillers and power cultivators equipped with rotary harrows can be used provided that the ground is tilled (ploughing, scarification) prior to using them.

### Summary of invention

Technical problem resolved by this invention is that it provides an equipment intended to help natural regeneration in tree stands. The equipment has reduced overall sizes, it is driven by a power cultivator (tyred tractor of small capacity), a tandem able to run through and get through the growing stock located in fields, mounds and hills, specific to the areas taken by oak (Quercus) forests, able to follow the local profile of the work area and till the ground by removing the litter, possibly breaking up the ground and mobilizing the soil surface with a view to ensuring the best conditions for the germination of seeds.

According to this invention, the equipment is based on a complex mechanical structure that can be attached to a driving unit such as a power cultivator or universal tractor that allows the equipment to position itself on the work site. It has a device for rotation on a longitudinal axis for partial tillage of soil in circular discs or strips, a device for palpation and effective processing of litter, namely of soil, which is following the soil profile, a device for removing the leaves and the wood waste, respectively for mobilizing the soil. The entire equipment is operated via a hydrostatic pressure plant.

Introduction of this type of equipment in silviculture has the following advantages:
- this invention is the only efficient equipment with mechanical operation intended for specific works coming to the aid of natural regeneration of tree stands;
- it is a versatile equipment that can be installed and operated from the front side of any average power cultivator (or a small power universal tractor);
- it allows tilling significant areas such as beds and strips in short time prior to disseminating the mature seeds, according to the optimum biological conditions;
- the tilled soil mixture can be homogenized by the active working parts resulting in flat surfaces worked by the circular movements thereof - for beds and cycloid movements - for strips;
- it allows strip-tilling of lands with inclines less than 10°similarly to narrow forestry terraces, in which case the tilling is done on the contour resulting in diminished erosion of surfaces from rainfalls;
- it can be adapted to the engineering requirements of land reclamation in terms of locally following the ground profile and adjusting the working depth and increasing/reducing the working radius and the number of active working parts;
- it spares the expenses with the labour consumed for achieving this type of work through manual means, it increases productivity per work and avoids the workforce scarcity;
- it allows for combining several types of operations for bed-till or strip-till purposes in turns or alternating;
- manufacture of a new type of equipment by the companies producing and selling power cultivators together with the range of equipment specialized by works.

### Brief description of drawings

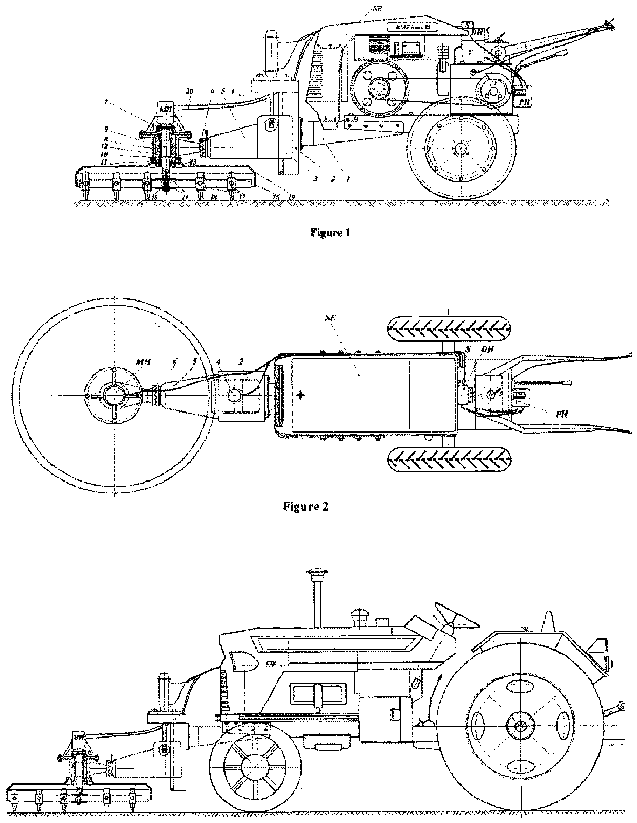

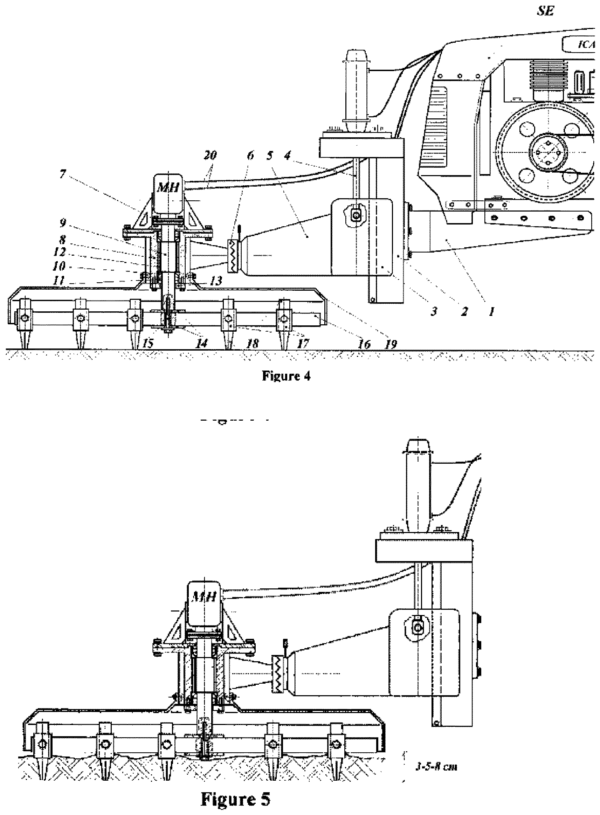

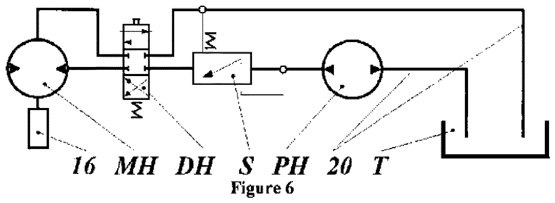

An example is given below in figures 1-6 showing how the invention is built and operated:
Figure 1 -Specific equipment designed for helping the natural regeneration of oak stands, driven by power cultivator, side view;
Figure 2 - Specific equipment designed for helping the natural regeneration of oak stands, driven by power cultivator, viewed from above;
Figure 3 - Specific equipment designed for helping the natural regeneration of oak stands, driven by universal tractor, side view;
Figure 4 - Specific equipment designed for helping the natural regeneration of oak stands, side view detail (no drawing of the power driving **SE** source);
Figure 5 -Specific equipment designed for helping natural regeneration of oak stands in the work process, soil surface mobilization simultaneously with removal of litter;
Figure 6 -Drawing of the hydrostatic transmission driving the rotating steel frame of the specific equipment intended for helping the natural regeneration of oak stands

### Description of embodiments

Specific equipment intended for helping the natural regeneration of oak stands has been designed for working surface mobilization of soil simultaneously with the removal of litter. It is attached to the front side of a driving unit **1** at the front of a driving power source **SE** being equipped with a vertical **2** framework equipped on the longitudinal front sides with dovetail guides on which the mobile body is sliding vertically **3** as driven through a vertical hydraulic cylinder rod **4** which has at the front side a stiffened undetachable longitudinal holder **5** extending to the quick toothed coupling **6** which allows the entire equipment rotate on the longitudinal axis, the equipment having on its upper part a **MH** hydraulic engine whose vertical axis is assembled through flanges 7 to main vertical axis **9** located inside steel body **8** held by roller bearings **10** spaced on the inside by bushing **12,** airtight due to gaskets **11,** all such components being secured to interior cover **13** via detachable assemblies with the hole threaded longitudinally (on the main vertical shaft 9) provided at the lower part to which the detachable rotating steel frame **16** is stiffened and secured with washers **14** of special make, stiffened with bolt **15** provided with safety washer to which are installed devices **17 for** securing and adjusting working bodies 18 such as chisel knife. On the rotating metal frame 16 , the devices 17 can slide longitudinally, giving the possibility to increase / decrease the working radius and also the active chisel knife working parts18 may decrease or increase the working depth by sliding them into the height adjustment supports 17 by means of screws fixed in supports.They are covered by fixed metal guard **19** which is stiffened and detachable to the steel body 8, the entire hydraulic plant being operated by hydraulic pump PH driven by the cultivator power take-off positioned at the end thereof, receiving the hydraulic fluid from the tank **T** and directing it to the two-way hydraulic distributor **DH** via flexible crimped hydraulic pipes **20** then to the final user via the flow-control valve **S** to the hydraulic engine **MH.**

The work process for tilling the beds involves partial preparation of soil in a shape close to a circular disc with diameters ranging between 0.8+1.0 m or 1.0 m wide strips upon removing the leaves and other wood and vegetal waste (litter) from the area of interest. It begins with moving the tandem made up of the power driving source **SE** (power cultivator or universal tractor of small capacity) and the equipment designed for helping natural regeneration through the motive force developed by the wheels of the power cultivator (tractor) to the areas intended for work. When the tandem movement is stopped, the equipment intended for helping natural regeneration should be positioned and stiffened using the attachment 1 to the power source **SE,** the power cultivator (tractor) power take-off is activated to drive the hydrostatic pump **PH** which receives the hydraulic fluid from the tank **T** directing it to the two-way hydraulic distributor **DH** operating in the first step the vertical hydraulic cylinder whose rod **4** pushes down the mobile body **3** sliding on the dovetail guides provided to the vertical frame **2** of the equipment, until the equipment, namely the tip of the active knife-chisel working parts **18** get in contact with the litter, respectively in contact with the soil, at which moment, if the soil features lack of planeness, the quick toothed coupling **6** is activated allowing the entire equipment to be adjusted, by rotation (left/right) on the longitudinal axis for copying the ground profile (so that any plane formed by the bottom part of the active working bodies **18** may be parallel to the ground plane) and obtaining a firm contact between the soil and the equipment, whereupon the second lever of the two-way hydraulic distributor **DH** is activated setting in motion the hydraulic engine **MH,** the rotating movements of the engine centerline being subject to the adjustment of the rate of the hydraulic fluid flowing through the valve **S** delivering the rotation movement of the hydraulic engine MH centerline to the main vertical centerline **9** encased in the assembled steel body 8 that can be disassembled through the system of flanges **7** provided with bolt-washer-nut, supported by the roller bearings **10,** centred to the inside with the metal **12** bushing and airtight due to simmer rings **11,** all these components being secured to the lower cover 13 by detachables assemblies sending the rotating movement to the rotating steel holder 16 of the devices **17** that secure and adjust the chisel-knife working parts **18** made of manganese steel, assembled and detachable using specific made washers **14 ,** stiffened with the bolt **15** provided with safety washer, threaded to the lower end of the main vertical centerline **9** delivering the rotation movement, whereupon the first lever is activated in the hydraulic distributor **DH** delivering to the entire equipment a descending local vertical movement, at which moment the chisel-knife working parts **18** in the first step start removing the leaves and any potential wood and vegetal waste, then in the second step still mobilizing the soil surface at a depth that can be adjusted (optionally) through the devices **17**of attachment and vertical adjustment of the working parts, all the components in rotational motion being covered by the fixed metal guard **19** which is stiffened and detachable to the metal body **8,** so that any items that are being driven away from centre (wood pieces, stones and others) might be halted by the guard, followed by activation of the first lever of the two-opposed way hydraulic distributor **DH,** which controls the vertical withdrawal of the entire unit, the rotational movement controlled by the second lever of the hydraulic distributor **DH** having the capacity to be activated/inactivated if a new bed is planned to be done close by/or the distance to run with the moving rotor to another location is too large.

Strip-till involves partial preparation of the ground on the contour line so that any run-off caused by rainfall might be minimized, in the shape of longitudinal strips of constant width, namely 1.0 m, and variable length, the procedure being the same as for the beds, with the difference that the tandem of the power source **SE** and the equipment designed to help natural regeneration keeps on running while moving the rotating metal holder **16** hosting the devices **17** for securing and adjusting the chisel-knife working parts **18,** which in this case will follow a cycloid motion throughout the longitudinal running.

## Claims

1. Equipment for natural regeneration assistance works specific to oak brush comprising a system (1) to fix it on a power source (SE) such as power cultivator or universal tractor of small capacity, a frame (2), a mobile body (3) driven through a vertical hydraulic cylinder (4), a hydraulic engine (MH) positioned at the upper part, whose vertical axis is assembled through a flange system (7) to a main vertical axis (9) located inside a steel body (8), supported by roller bearings (10), spaced at the inside from each other with a bushing (12), airtight due to gaskets (11), all these components being attached to a lower cover (13) by detachable assemblies, with a hole threaded longitudinally to the lower part to which it is stiffened with washers (14) of special make and assembled with a bolt (15) provided with a safety washer, a stiffened undetachable longitudinal holder (5) positioned at the front side of the vertical hydraulic cylinder (4) and extending to a quick coupling (6) enabling the equipment to rotate on the longitudinal centerline and accordingly to be adapted to the slope of the land, and a rotating holder (16) covered by a fixed metal guard (19) which is stiffened, detachable from the steel body (8), and to which are attached devices (17) for securing and adjusting chisel-knife working parts (18).

2. Method of use of the equipment for natural regeneration assistance works specific to oak brush as defined in claim 1 **characterised in that** it comprises processing the following steps: - the tandem made up of the source (SE) and the equipment is running to the locations established for work;- the cultivator power take-off is activated until the equipment gets in contact with the litter;- the ground profile is copied and a firm contact with the soil is achieved;- the leaves and any wood and vegetal waste are removed;- soil surface mobilization through the devices for securing the chisel knife working parts which by their vertical adjustment enable adjustable working depth; - the strip-till is performed, which implies partial preparation of the soil on the contour line as longitudinal strips of constant 1.0 m width and variable length.

## Patentansprüche

1. Vorrichtung zur Unterstützung der natürlichen Regeneration arbeiten spezifisch für Eichenbürsten umfassend ein System (1) um sie an der an einer Stromquelle (SE) wie z.B. einem Kraftgrubber oder einem Universaltraktor mit geringer Kapazität zu befestigen, ein Rahme (2), einen mobilen Körper (3), der durch einen vertikalen Hydraulikzylinder (4) angetrieben wird, einen Hydraulikmotor (MH), der im oberen Teil positioniert ist, dessen vertikale Achse durch ein Flanschsystem (7) mit einer vertikalen Hauptachse (9) zusammengesetzt ist, die sich in einem Stahlkörper (8) befindet; unterstützt durch Rollenlager (10), die innen durch eine Buchse (12) voneinander beabstandet sind, luftdicht aufgrund von Dichtungen (11), wobei alle diese Komponenten werden durch abnehmbare Baugruppen an einer unteren Abdeckung (13) befestigt, wobei ein Loch in Längsrichtung zum unteren Teil geschraubt ist, an dem sie mit Unterlegscheiben (14) spezieller Marke versteift und mit einer mit Sicherheit versehenen Schraube (15) zusammengebaut sind, die mit einer Sicherheitsscheibe versehen ist, einem versteiften, nicht abnehmbaren Längshalter (5), der an der Vorderseite des vertikalen Hydraulikzylinders positioniert ist (4) und Ausdehnung auf eine Schnellkupplung (6) ermöglichen, die Ausrüstung, um sich auf der Längsmittellinie zu drehen und dementsprechend an die Neigung des Bodens anzupassen werden, und einen rotierenden Halter (16), der von einem festen Metallschutz (19) abgedeckt ist, der versteift ist, vom Stahlkörper (8) abnehmbar ist und an welche Vorrichtungen (17) zum Sichern und Einstellen von Meißelmesser-Arbeitsteilen (18) angebracht sind.

2. Verfahren zur Verwendung der Ausrüstung zur Unterstützung der natürlichen Regeneration spezifisch für Eichenbürsten gemäß Anspruch 1, **gekennzeichnet dadurch, dass** es die Verarbeitung der folgenden Schritte umfasst: - das aus der Quelle (SE) bestehende Tandem und die Ausrüstung laufen zu den für die Arbeit festgelegten Orten; - der Nebenabtrieb des Grubers wird aktiviert, bis die Ausrüstung mit dem Abfall in Kontakt kommt; - das Bodenprofil wird kopiert und ein festern Kontakt mit dem Boden wird erreicht; - die Blätter sowie Holz- und Pflanzenabfälle werden entfernt - die Mobilisierung der Bodenoberfläche durch die Vorrichtungen zum Sichern der Meißelarbeitsteile, die durch ihre vertikale Einstellung eine einstellbare Arbeitstiefe ermöglichen; - die Streifenbearbeitung wird durchgeführt, was eine teilweise Vorbereitung des Bodens auf der Konturlinie als Längsstreifen mit konstanter Breite von 1,0 m und variabler Länge impliziert.

## Revendications

1. Equipement pour travaux d'assistance à la régénération naturelle spécifique à la brosse en chêne comprenant un système (1) de fixation de celle-ci sur une source d'énergie (SE) telle que motoculteur ou tracteur universel de petite capacité, un châssis (2), une carrosserie mobile (3) entraînée par un cylindre hydraulique vertical (4), un moteur hydraulique (MH) positionné en partie supérieure, dont l'axe vertical est assemblé par un système de bride (7) à un axe vertical principal (9) situé à l'intérieur d'un corps en acier (8), supportés par des roulements à rouleaux (10), espacés à l'intérieur les uns des autres par une douille (12), étanche à l'air grâce aux joints (11), tous ces éléments étant fixés sur un couvercle inférieur (13) par des ensembles amovibles, avec un trou fileté longitudinalement à la partie inférieure à laquelle il est rigidifié avec des rondelles (14) de fabrication spéciale et assemblé avec un boulon (15) pourvu d'une rondelle de sécurité, un support longitudinal rigidifié non amovible (5) positionné à l'avant du cylindre hydraulique vertical (4) et s'étendant jusqu'à un raccord rapide (6) permettant l'équipement de se tourner sur la ligne médiane longitudinale et en conséquence pour être adapté à la pente du terrain, et un support rotatif (16) couvert par une protecteur métallique fixe (19) qui est rigidifiée, détachable du corps en acier (8) et pour qui sont attaché des dispositifs (17) pour fixer et régler des pièces de travail de ciseau-couteau (18).

2. Procédé d'utilisation de l'équipement pour les travaux d'assistance à la régénération naturelle spécifiques a la brosse en chêne tel que défini à la revendication 1, **caractérisé en ce qu'**il comprend de traiter des étapes suivantes: - le tandem constitué de la source (SE) et de l'équipement circule jusqu'aux emplacements établi pour les travaux; - la prise de force du cultivateur est activée jusqu'à ce que l'équipement entre en contact avec la litière; - le profil du sol est copié et un contact ferme avec le sol est obtenu; - les feuilles et les déchets de bois et végétaux sont enlevés - mobilisation de la surface du sol grâce aux dispositifs de fixation des pièces de travail de ciseau-couteau qui, par leur réglage vertical, permettent une profondeur de travail réglable; - le strip-till est réalisé, ce qui implique une préparation partielle du sol sur la courbe de niveau sous forme de bandes longitudinales de largeur constante de 1,0 m et de longueur variable.
